# EUROPEAN PATENT SPECIFICATION

(11) **EP 3 451 855 B1**
(45) Date of publication and mention of the grant of the patent: **15.04.2020**
(21) Application number: 17720820.4
(22) Date of filing: 03.05.2017
(51) Int. Cl.: A23L 3/015, A23L 3/365, A23B 4/06, A23B 4/07, A23L 3/36, A23L 5/10

(54) **METHOD FOR DEFROSTING AND COOKING FOOD PRODUCTS**
VERFAHREN ZUM ABTAUEN UND ZUM KOCHEN VON LEBENSMITTELPRODUKTEN
PROCÉDÉ POUR LA DÉCONGÉLATION ET LA CUISSON DE PRODUITS ALIMENTAIRES

(30) Priority: 03.05.2016 IT UA20163112
(43) Date of publication of application: 13.03.2019
(73) Proprietor: Villa Food S.r.l., 33029 Villa Santina (UD) (IT)
(72) Inventor: GREATTI, Denis, 33050 Pozzuolo Del Friuli (IT)
(74) Representative: Petraz, Gilberto Luigi
(86) International application number: PCT/EP2017/060558
(87) International publication number: WO 2017/191200

(56) References cited:
- JP-A- H06 277 017
- JP-A- H10 313 773
- US-A1- 2012 269 953
- US-B1- 6 440 484

## Description

### FIELD OF APPLICATION

Forms of embodiment described herein refer to a method and to an apparatus using said method for the treatment of a food product, as well as to the resulting food product.

In particular, forms of embodiment described herein refer to a method for the treatment of a food product and to the related apparatus, aimed at the production of treated food products, to be sold in shops, supermarkets, shopping centers, bars, restaurants, hotels or other type of premises destined for marketing said products.

### STATE OF THE ART

It is known that, typically, food products available on the market undergo various phases of processing before they can be distributed and then sold to the final consumer. Since the initial processing phases, some food products need to be kept at temperatures below 0°C and possibly need to be defrosted even only temporarily, so that specific heat treatments, such as pasteurization or the like, can be carried out.

Yet, both defrosting operations and heat treatments require long times to obtain a required food product that, beside meeting the hygienic and food safety requirements, turns out to be also palatable with high organoleptic characteristics.

In order to make processing operations quicker and hence accelerate the production of food products, the known state of the art provides to thermally treat the still quick-frozen food.

Nonetheless, because of the thermal inertia due to the presence of bones and/or inhomogeneity in the food products to be treated, said solution requires high temperatures, long times and does not guarantee a uniform treatment.

This leads to a slow-down of production and also to damage of the food product texture, which is typically accompanied by an excessive loss of liquids, an hardening of the product, and sensible alteration of taste and aroma.

Various defrosting techniques are known that are carried out prior to a heat treatment, such as, for instance, defrosting at room temperature, defrosting in conditions of temperature comprised between 0°C and 4°C, and defrosting under running water.

All these known solutions have a plurality of drawbacks that make them little suitable to obtain a palatable and hygienically safe food product.

Defrosting at room temperature turns out to be not very safe from a hygienic and safety point of view, because, due to the action of various enzymes and/or pathogens, the defrosted food product gets browned, has a decadent texture and also a loss of liquids and of nutrients.

Furthermore, said solution requires long times and big storage volumes that are economically impracticable in food industry.

Defrosting in conditions of temperature comprised between 0°C and 4°C is safer than defrosting at room temperature because it prevents pathogens and enzymatic actions from developing, but also this solution requires long times and big storage volumes at controlled temperature.

Defrosting under running water does not have the drawback of requiring long times or big volumes, nonetheless it requires a system for the continuous monitoring of temperature and of the quality of defrosting water so as not to favor the development of pathogens.

This requires a considerable commitment of economic resources that is not always covered by the revenues generated.

The document US-B-6,440,484 (US'484) describes a method for treating meat and/or fish at high pressure that provides to keep the food product frozen, or however at a negative temperature, during and at the end of high-pressure treatment.

The US'484 provides to introduce the frozen product into a chamber where temperature is kept constantly negative, for instance at a temperature of -30°C.

This solution not only provides phases of defrosting and refreezing, alternating with possible phases of cutting up the product, which alter its organoleptic properties, but entails also a considerable expenditure of energy, as well as high cost.

In addition to that, the method described in the US'484 provides a food product that does not have organoleptic characteristics of a high palatability, since the texture of the resulting product is altered and the final product is in no way comparable to a fresh product.

This known method provides also to partially dehydrate the product up to 65%. This entails a consequent lowering of quality, meant both from the point of view of nutrition and from the point of view of palatability.

Based on the range identified in the US'484, moreover, it is not possible to apply high pressures, since the method itself uses a hyperbaric chamber with thin walls.

In any case, the final purpose of the US'484 is to provide a frozen food product destined for the cold chain market and not a food product comparable to a fresh food product subject to cooking.

Other limitations and drawbacks of conventional solutions and technologies will become evident to a person of skill in the art after reading the remaining part of the present specification with reference to the drawings and to the description of the forms of embodiment that follow, even though it is understood that the description of the state of the art related to the present specification shall not be considered an admission that what is described here is already known from the prior state of the art.

Therefore, there exists the need to improve the known state of the art and to provide a method to obtain a treated food product, a related apparatus using said method, and a resulting food product that can overcome at least one of the drawbacks of the known techniques.

In particular, the present invention sets itself the object to provide a method, and an apparatus using said method, to obtain a treated food product in a uniform manner and that do not require great defrosting storage volumes.

Again, an object of the present invention is to provide and propose on the market a cooked food product having organoleptic characteristics that are the same as, or at least similar to or comparable with, a fresh product subjected to cooking.

Further to that, the present invention sets itself the object to provide a food product treated with the above-mentioned method that has organoleptic characteristics of a high palatability and that in the same time is safe from a hygienic-sanitary point of view.

It is further an object of the present invention to provide a method, and an apparatus using said method, to obtain a food product treated in a short time.

To overcome the shortcomings of the prior art and to achieve these as well as other objects and advantages, the Applicant studied, experimented and realized the present invention.

### EXPOSITION OF THE INVENTION

The present invention is set out and characterized in the independent claims. The dependent claims expound other features of the present invention or variants to the main idea of solution.

Forms of embodiment described herein refer to a method to obtain a treated food product that provides at least:
- to place at least one quick-frozen or frozen food product, contained and packaged in a respective vacuum-packed wrapping, in a hyperbaric chamber that defines a positive temperature environment;
- to defrost the food product placed in said hyperbaric chamber defining said positive temperature environment, subjecting the food product to a hydrostatic pressure comprised between 1000bar and 7000bar until the food product itself is brought to a suitable positive temperature, thereby defrosting it;
- to cook the food product contained and packaged in said vacuum-packed wrapping and subjected to defrosting in the afore-mentioned hyperbaric chamber.

Thanks to the synergic action of defrosting at very high pressures with the subsequent cooking of the food product, keeping it still under vacuum in its own closed wrapping, pathogens, parasitic and bacteriological forms and/or enzymes that are harmful and/or altering the final product are eliminated, however keeping its nutritive characteristics unaltered.

This allows to obtain a final food product that has a long useful life, a high pleasantness and palatability, and with a high level of hygienic-food safety.

A form of embodiment of the present invention provides that the method can defrost the quick-frozen or frozen food product, contained and packaged in a vacuum-packed wrapping, by subjecting it to a hydrostatic pressure comprised between 2000bar and 7000bar, more particularly between 3000bar and 7000bar.

Further forms of embodiment refer also to an apparatus using the method for treating a food product in accordance with the present specification. Said apparatus comprises at least:
- a feed station configured to make available at least one quick-frozen or frozen food product, contained and packaged in a respective vacuum-packed wrapping;
- a defrosting station comprising a hyperbaric chamber that defines a positive temperature environment where the afore-mentioned quick-frozen or frozen food product, contained in the vacuum-packed wrapping, is to be placed, said defrosting station being configured to subject the quick-frozen or frozen food product, contained and packaged in the vacuum-packed wrapping and placed in the hyperbaric chamber defining said positive temperature environment, to a pressure comprised between 1000bar and 7000bar;
- a cooking station configured to cook the food product contained and packaged in its own vacuum-packed wrapping and subjected to defrosting in the afore-mentioned hyperbaric chamber.

According to a further aspect, forms of embodiment described herein refer also to a food product treated with the method described above that can undergo further phases such as, for instance, a second quick-freezing or freezing process, or further processing operations also outside the wrapping, so that it can be subsequently distributed and then sold.

These and other aspects, features and advantages of the present disclosure will be better appreciated with reference to the following description, to the accompanying drawing and to the appended claims. The accompanying drawing, which is integrated into and which forms part of the present description, illustrates some forms of embodiment of the present subject-matter and, together with the description, intends to describe the principles of the disclosure.

The various aspects and features described in the present specification can be applied individually, where possible. These individual aspects, for instance aspects and features contained in the description or in the appended dependent claims, can be the object of divisional applications.

It shall be noted that any aspect or feature that is found out to be already known during the patenting procedure is meant to be not claimed and is subject to a disclaimer.

### ILLUSTRATION OF THE DRAWINGS

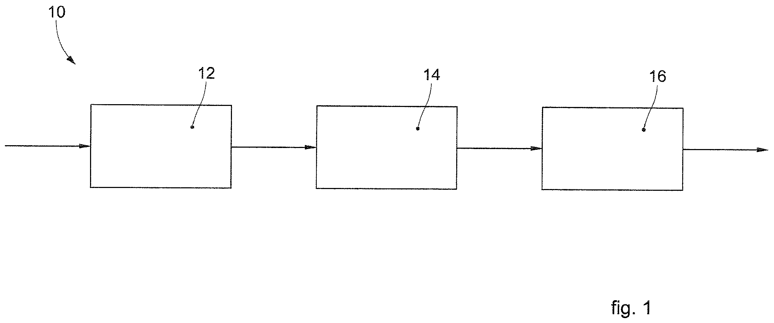

These and other features of the present invention will be clear from the following description of forms of embodiment, provided by way of a nonlimiting example, with reference to the annexed figure 1, which shows a block diagram of an apparatus for the treatment of a food product according to forms of embodiment described herein.

### DESCRIPTION OF FORMS OF EMBODIMENT

Reference will be now made in detail to the various forms of embodiment of the invention, of which one or more examples are illustrated in the appended drawing. Each example is provided as an illustration of the invention and is not meant as a limitation of the same. For example, the features illustrated or described as being part of a form of embodiment can be adopted on, or in conjunction with, other forms of embodiment to produce a further form of embodiment. It is understood that the present invention comprises said modifications and variants.

Forms of embodiment refer to a method, and to the related apparatus 10, for the treatment of a food product, which are aimed at the production of a food product to be marketed in shops, supermarkets, shopping centers, bars or other type of premises destined for selling said treated food products.

Here and in the present specification food product means a food raw material, a semi-processed food or a food in general to be defrosted and/or pasteurized or on which another treatment can be carried out.

For example, with food product a product with a protein base can be considered, such as meat with or without bones, fish, or dairy products or their derivatives, fruit and/or vegetables, or other food that can be defrosted also temporarily to carry out processing operations and/or intermediate treatments on them before their sale.

In the description that follows, except for indications to the contrary, we will refer to an exemplary food product, and in particular to a food with a protein base, such as, for instance, pig meat.

Nonetheless, the present description is not limited to this specific example, but can be extended also to other food products.

In accordance with forms of embodiment, the method described herein provides to treat quick-frozen or frozen food products, i.e. at a temperature below zero, that preserve their own organoleptic characteristics, keeping their nutritional properties substantially unaltered.

In accordance with forms of embodiment, the method according to the present specification, used to obtain a treated food product, provides at least:
- to place at least one quick-frozen or frozen food product, contained and packaged in a respective closed vacuum-packed wrapping, in a hyperbaric chamber that defines a positive temperature environment;
- to defrost the food product placed in said hyperbaric chamber defining said positive temperature environment, subjecting the food product to a hydrostatic pressure comprised between 1000bar and 7000bar until the food product itself is brought to a suitable positive temperature, thereby defrosting it;
- to cook the defrosted food product contained in the vacuum-packed wrapping.

According to a further aspect, the present disclosure relates also to an apparatus 10 using said method that provides at least:
- a feed station 12 configured to make available at least one quick-frozen or frozen food product, contained in a respective vacuum-packed wrapping;
- a defrosting station 14 comprising a hyperbaric chamber that defines a positive temperature environment where said quick-frozen or frozen food product, contained in the vacuum-packed wrapping, is to be placed, said defrosting station 14 being configured to subject the quick-frozen or frozen food product contained in the vacuum-packed wrapping to a pressure comprised between 1000bar and 7000bar and placed in the hyperbaric chamber defining said positive temperature environment, in a positive temperature environment;
- a cooking station 16 configured to cook the food product, contained in the vacuum-packed wrapping, coming from the defrosting station 14.

In accordance with the forms of embodiment described herein, with the term "positive temperature" a temperature above zero °C (0 °C) is meant.

According to a form of embodiment, which can be combined with other forms of embodiment described herein, the apparatus 10 can provide, in possible further implementations, also further work stations configured, for instance, to carry out a defrosting or a freezing of the resulting food product, or a packaging.

In accordance with forms of embodiment, which can be combined with other forms of embodiment described herein, the various processing and/or treatment stations of the apparatus 10 can be connected by a handling station that is configured to deliver and/or collect from the stations of the apparatus one or more food products until the resulting food product is provided at the exit. For example, the handling station can comprise a conveyor belt, or another analogous or equivalent handling system, which connects the various stations of the apparatus 10.

According to a form of embodiment, the quick-frozen or frozen food product is provided, for example, by means of a suitable bagging station, already packaged inside a specific vacuum-packed, closed wrapping.

For example, the closed wrapping can comprise a bag, a deformable container, or another container made, for instance, of plastic suitable for food use or of another water-resistant material suitable for food use, inside of which it is possible to obtain a vacuum or high vacuum condition in a known manner.

In accordance with forms of embodiment, the apparatus 10 using the method described above provides a feed station 12 configured to make available one quick-frozen or frozen food product, contained in a respective vacuum-packed wrapping.

According to an advantageous form of embodiment, said feed station 12 can be configured to subdivide the quick-frozen or frozen food products, contained in the respective vacuum-packed wrappings, loading them in suitable baskets depending on the food product type, on their weight and/or on their volume.

Typically, baskets are configured to withstand high hydrostatic pressures, i.e. even up to 7000bar, and also temperatures higher than 200°C.

According to a form of embodiment of the present disclosure the defrosting station 14 can comprise a hyperbaric chamber configured to receive, from the feed station 12, the quick-frozen or frozen food products, already contained and packaged in the vacuum-packed wrappings, possibly subdivided in the various baskets.

The temperature in the hyperbaric chamber is a positive temperature, for example a temperature comprised between 5°C and 15°C.

According to other forms of embodiment, the defrosting station 14 can comprise a chamber containing a liquid, such as water or another liquid, through which it is possible to obtain inside the chamber a condition of very high hydrostatic pressure, i.e. with hydrostatic pressure values comprised between 1000bar and 7000bar.

The temperature of the liquid is a positive temperature, for instance a temperature comprised between 5°C and 15°C.

After placing the still quick-frozen or frozen food products inside the chamber of the defrosting station 14 and after isolating the latter from the outside, inside of it hydrostatic pressure is raised to a value comprised between 1000bar and 7000bar.

Advantageously, hydrostatic pressure inside the chamber can reach a value comprised between 2000bar and 7000bar, more particularly between 3000bar and 7000bar.

Said pressure values were optimized both to allow for the transition from the solid state to the liquid state of quick-frozen or frozen water contained in the quick-frozen or frozen food product, and to free the food product from pathogens, parasitic agents or from other contaminants that lower the hygienic-sanitary level of the food product.

During the increase of hydrostatic pressure, because of the frictional forces that occur due to the friction of the molecules of the food product, heat develops from the inside of the food product itself, so as to defrost it and then bring the food product itself to a positive temperature. This positive temperature can advantageously be equal to or lower than the temperature of the liquid contained in the hyperbaric chamber.

In this phase, reciprocal sliding of the molecules, aimed at the achievement of the configuration of equilibrium with the minimum space occupation level, generates a rise of temperature of the food product of about 2/3 °C per 1000bar.

Thanks to this, a very quick defrosting of the food product can be obtained in a time that varies from 100 seconds to 400 seconds, depending on the physical parameters and on the type of food product to be defrosted.

In particular, the choice of the pressure value and of the defrosting time varies proportionally to the weight of the food product, to its volume and to the ratio between the fat matrix and the bone matrix possibly present in the food product itself.

By virtue of the hydrostatic effect of the fat matrices distributed inside the food product, which realize respective melting points inside the food product, defrosting, while the food product is subjected to a very high hydrostatic pressure, is quicker and more homogeneous as compared to thermal pasteurization or to other heat treatments.

On the contrary, the presence of the bone matrices inside the food product leads to sources of thermal inertia that hinder the diffusion of heat in the portion of the food product immediately close to the bone matrix.

In this latter case, forms of embodiment described herein provide to prolong the defrosting time using a very high hydrostatic pressure that, nonetheless, ends within a shorter time as compared to the known defrosting techniques and in a complete manner, i.e. without parts of the food product that are not completely defrosted.

In spite of the presence of bone matrices and/or other substrates that bring about a thermal inertia, defrosting overcomes the problem described above with a slight increase in times and/or in the pressures of treatment by using very high hydrostatic pressures.

These times are much shorter than defrosting times with the known techniques. Hence, forms of embodiment described herein can be applied also on food products with bones, since it is sufficient to adapt the defrosting parameters, i.e. time and pressure of the treatment.

In accordance with forms of embodiment, said defrosting phase allows not to have slow-downs in production and/or an alteration in the texture and in the taste of the resulting food product by using very high hydrostatic pressures in a positive temperature environment.

Thanks to the present invention, hence, the problems are overcome that are typical of known treatments where the frozen food product remains frozen during and after the high-pressure treatment, because the environment where the food product is placed is constantly kept at a negative temperature.

Based on this, the method for treating a food product in accordance with forms of embodiment described herein is advantageous as compared to thermal pasteurization, or other heat treatments, because contrary to these treatments it allows to carry out a homogeneous defrosting of the food product.

By using very high hydrostatic pressures, defrosting of the food product allows to preserve organoleptic characteristics, liquids and nutritional properties of the food product, because it is carried out keeping the food product packaged inside a vacuum-packed wrapping in a positive temperature environment defined by the hyperbaric chamber where defrosting occurs.

By way of example, Table 1 gives here below some experimental values of a food product with a protein base in order to clarify how the treatment parameters, i.e. pressure and time, depend on the physical characteristics of the food product to be defrosted.

It is understood that for intermediate values it is possible to suitably interpolate the experimental values reproduced, or also convert them with specific conversion factors, in case of other types of food product to be treated.

**TABLE 1**

| **FOOD PRODUCT CHARACTERISTICS** | **TREATMENT PARAMETERS** | |
|---|---|---|
| | PRESSURE (bar) | TIME (s) |
| Food product with a protein base with a weight less than 1kg | 4000 | 100/150 |
| Food product with a protein base with a weight over 1kg | 6000 | 300 |
| Food product with a protein base with a volume less than 1cm³ | 5000 | 300 |
| Food product with a protein base with a volume over 1cm³ | 6000 | 360 |
| Presence of bones | 6000 | 400 |
| Presence of fat | 6000 | 180 |

In accordance with forms of embodiment, during defrosting by using very high hydrostatic pressures in the hyperbaric chamber that defines the positive temperature environment, also a microbicidal effect is achieved on vegetative forms of microorganisms and/or of the various pathogens, saprophytes and parasites, as well as an action of denaturation of enzymes. In other words, a so-called pasteurization at very high pressures takes place that, contrary to thermal pasteurization, does not degrade the organoleptic and/or sensorial properties of the food product.

For example, if the food product is meat, defrosting at very high hydrostatic pressures in a positive temperature environment defined by the hyperbaric chamber allows to eliminate also *Toxoplasma gondii* and *Trichinella spiralis* that are inactivated if they are brought for some minutes to hydrostatic pressures over 2000bar, or with an equivalent treatment.

The Applicant verified that very high pressures, after defrosting the food product, can create the conditions according to which, because of the modification of the sporogenous capsule, some spores and/or sporogenous bacteria germinate instantaneously.

This effect was overcome thanks to the introduction, in the method according to forms of embodiment described herein, of a phase of cooking the food product after the phase of defrosting using very high hydrostatic pressures in the hyperbaric chamber that defines the positive temperature environment in which precisely defrosting occurs.

In accordance with forms of embodiment, after carrying out the phase of defrosting in the defrosting station 14 of the apparatus 10, the defrosted food product contained and packaged in the vacuum-packed wrapping is sent to a cooking station 16.

According to a possible implementation, the cooking station 16 can comprise ovens configured to receive the defrosted food products contained and packaged in the respective vacuum-packed wrappings, possibly subdivided in the same baskets already used in the defrosting station 14.

Said ovens can be configured to cook the food products previously defrosted using very high hydrostatic pressures, based on the desired cooking degree.

In accordance with forms of embodiment, the cooking station 16 can comprise one or more cooking devices, such as, for instance, devices for microwave, induction, steam cooking or other type of cooking based on the specific requirements and on the food product type.

For example, the baking parameters can be comprised between 50°C and 100°C for a time varying from 60 minutes to 15 hours based on the food product to be cooked and on the desired cooking degree.

The Applicant verified that to eliminate bacteria deriving from activated spores, during defrosting at very high hydrostatic pressures in a positive temperature environment, a cooking time from few seconds to some minutes at temperatures over 50°C is sufficient to eliminate these bacteria deriving from the activated spores and hence clear the food product.

Thanks to the combined and synergic effect of defrosting the food products contained and packaged in the vacuum-packed wrappings using very high hydrostatic pressures in a positive temperature environment and of their subsequent cooking, the following benefits can be obtained:
- the treated and cooked food product keeps its organoleptic characteristics substantially unaltered and moreover does not lose liquids and/or nutrients, because it is contained and packaged in a vacuum-packed wrapping and the very high hydrostatic pressure does not allow for leakage of liquids and/or of substances contained in the food product;
- defrosting is rapid and thanks to the bactericidal effect of pressure, combined with the phase of cooking, allows to obtain a food product that is freed from the possible disvital vegetative forms weakened during defrosting at very high hydrostatic pressures, and eliminated with the phase of cooking, so that a food product that is safe from a hygienic-sanitary point of view can be obtained rapidly;
- the method allows to carry out a homogeneous defrosting and cooking, because defrosting is generated uniformly from the inside of the food product and the subsequent phase of cooking is not hindered by non-homogeneous penetrations and diffusions of heat in the food product, since this is cooked after being completely defrosted in a positive temperature environment.

It is evident that modifications and/or additions of parts and/or phases can be made to the present method, to the related apparatus for the treatment of a food product and to the resulting food product described heretofore, without, for this, departing from the scope of the present invention.

## Claims

1. Method to obtain a treated food product, **characterized in that** it provides at least:
- to place at least one quick-frozen or frozen food product, contained and packaged in a respective vacuum-packed wrapping, in a hyperbaric chamber that defines a positive temperature environment;
- to defrost said food product placed in said hyperbaric chamber defining said positive temperature environment, subjecting said food product to a hydrostatic pressure comprised between 1000bar and 7000bar until said food product is brought to a suitable positive temperature, thereby defrosting it;
- to cook said defrosted food product contained and packaged in said vacuum-packed wrapping.

2. Method as in claim 1, **characterized in that** said defrosting is carried out by subjecting said food product to a hydrostatic pressure comprised between 2000bar and 7000bar, more particularly between 3000bar and 7000bar.

3. Method as in claim 1 or 2, **characterized in that** said quick-frozen or frozen food product, contained and packaged in a respective vacuum-packed wrapping, is a food product with a protein base with or without bone.

4. Method as in claim 3, **characterized in that** said quick-frozen or frozen food product is meat or fish.

## Patentansprüche

1. Verfahren zum Erhalt eines behandelten Nahrungsmittelprodukts, **dadurch gekennzeichnet, dass** es zumindest bereitstellt:
- das Platzieren mindestens eines schnell-gefrorenen bzw. tiefgekühlten oder gefrorenen Nahrungsmittelprodukts, enthalten und verpackt in einer jeweiligen Vakuum-verpackten Umhüllung, in einer Überdruck-Kammer, die eine positive Temperaturumgebung definiert;
- Auftauen des Nahrungsmittelprodukts, das in der Überdruck-Kammer platziert ist, die die positive Temperaturumgebung definiert, Aussetzen des Nahrungsmittelprodukts einem hydrostatischen Druck zwischen 1000 bar und 7000 bar, bis das Nahrungsmittelprodukt zu einer geeigneten positiven Temperatur gebracht ist, wobei es auftaut;
- Kochen des aufgetauten Nahrungsmittelprodukts, das in der vakuumverpackten Umhüllung enthalten und verpackt ist.

2. Verfahren nach Anspruch 1, **dadurch gekennzeichnet, dass** das Auftauen mittels des Aussetzens des Nahrungsmittelprodukts einem hydrostatischen Druck zwischen 2000 und 7000 bar ausgeführt wird, insbesondere zwischen 3000 und 7000 bar.

3. Verfahren nach Anspruch 1 oder 2, **dadurch gekennzeichnet, dass** das schnell-gefrorene bzw. tiefgekühlte oder gefrorene Nahrungsmittelprodukt, das in der vakuumverpackten Einhüllung enthalten und verpackt ist, ein Nahrungsmittelprodukt mit einer Proteinbasis mit oder ohne Knochen ist.

4. Verfahren nach Anspruch 3, **dadurch gekennzeichnet, dass** das schnell-gefrorene oder gefrorene Nahrungsmittelprodukt Fleisch oder Fisch ist.

## Revendications

1. Méthode pour obtenir un produit alimentaire traité, **caractérisée en ce qu'**elle comporte au moins les étapes consistant à :
- placer au moins un produit alimentaire surgelé ou congelé, contenu et conditionné dans un emballage sous vide respectif, dans une chambre hyperbare définissant un environnement à température positive ;
- décongeler ledit produit alimentaire placé dans ladite chambre hyperbare définissant ledit environnement à température positive, soumettre ledit produit alimentaire à une pression hydrostatique comprise entre 1000 bar et 7000 bar jusqu'à ce que ledit produit alimentaire soit porté à une température positive appropriée, en le décongelant de la sorte ;
- cuire ledit produit alimentaire décongelé contenu et conditionné dans ledit emballage sous vide.

2. Méthode selon la revendication 1, **caractérisée en ce que** ladite décongélation est effectuée en soumettant ledit produit alimentaire à une pression hydrostatique comprise entre 2 000 bar et 7 000 bar, plus particulièrement entre 3 000 bar et 7 000 bar.

3. Méthode selon la revendication 1 ou 2, **caractérisée en ce que** ledit produit alimentaire surgelé ou congelé, contenu et emballé dans un emballage sous vide respectif, est un produit alimentaire avec une base protéique avec ou sans os.

4. Méthode selon la revendication 3, **caractérisée en ce que** ledit produit alimentaire surgelé ou congelé est de la viande ou du poisson.
